# EUROPÄISCHE PATENTSCHRIFT

(11) **EP 3 600 946 B1**
(45) Veröffentlichungstag und Bekanntmachung des Hinweises auf die Patenterteilung: **07.09.2022**
(21) Anmeldenummer: 18712528.1
(22) Anmeldetag: 12.03.2018
(51) Int. Cl.: B60L 7/24, B60T 8/172, B60L 7/26, B60T 17/22

(54) **BREMSVORRICHTUNG FÜR SCHIENENFAHRZEUGE UND VERFAHREN ZUM BREMSEN VON SCHIENENFAHRZEUGEN**
BRAKING DEVICE FOR RAIL VEHICLES AND METHOD FOR BRAKING RAIL VEHICLES
DISPOSITIF DE FREINAGE POUR VÉHICULES FERROVIAIRES ET PROCÉDÉ DE FREINAGE DE VÉHICULES FERROVIAIRES

(30) Priorität: 22.03.2017 DE 102017106119
(43) Veröffentlichungstag der Anmeldung: 05.02.2020
(73) Patentinhaber: KNORR-BREMSE Systeme für Schienenfahrzeuge GmbH, 80809 München (DE)
(72) Erfinder: ZWILLING, Bernhard, 82061 Neuried (DE); STANKO, Michael, 80999 München (DE); FRIESEN, Ulf, 85579 Neubiberg (DE); GRUBER, Miriam, 80992 München (DE); VOIGTLÄNDER-TETZNER, Roland, 85591 Vaterstetten (DE)
(86) Internationale Anmeldenummer: PCT/EP2018/056057
(87) Internationale Veröffentlichungsnummer: WO 2018/172120

(56) Entgegenhaltungen:
- EP-A1- 3 064 409
- EP-A2- 2 033 835
- WO-A1-2014/079490
- WO-A2-2013/034731
- CN-U- 203 268 028
- DE-A1-102009 051 019
- DE-A1-102011 052 545
- DE-A1-102012 203 132
- DE-A1-102012 223 901
- DE-A1-102014 214 822
- FR-A1- 3 038 283

## Beschreibung

Die Erfindung betrifft eine Bremsvorrichtung für Schienenfahrzeuge, ein Schienenfahrzeug bzw. einen Verbund von Schienenfahrzeugen mit einer solchen Bremsvorrichtung sowie ein Verfahren zum Bremsen von Schienenfahrzeugen.

Üblicherweise ist der Fahrzeugführer für den Betrieb eines Schienenfahrzeugs einschließlich Beschleunigen und Bremsen vollverantwortlich. In der Regel sind zusätzliche Sicherheitssysteme vorgesehen, die den Fahrzeugführer unterstützen bzw. überwachen und ggf. ein Anhalten des Schienenfahrzeugs erzwingen können. Hierzu zählen zum Beispiel eine Sicherheitsfahrschaltung (SiFa) oder Zugbeeinflussungssysteme wie eine Linienzugbeeinflussung (LZB) oder ein europäisches Zugsteuerungssystem (European Train Control System, ETCS).

Schienenfahrzeuge sind in der Regel mit mehreren Bremsbauarten ausgestattet, die in den verschiedenen Bremsungsarten zum Einsatz kommen. Zu den Bremsbauarten zählen insbesondere Druckluftbremsen, Reibungsbremsen, dynamische Bremsen und elektrodynamische Bremsen. Ferner werden elektro-pneumatische Bremsen zum Beispiel als eine Einrichtung zur Ansteuerung der Druckluftbremse zum gleichzeitigen Bremsen oder Lösen aller Bremsaktuatoren eines Wagens eines Schienenfahrzeugs oder auch mehrerer oder aller Wagen eines Schienenfahrzeugs eingesetzt. Zu den Bremsungsarten zählen insbesondere die Betriebsbremsung, die üblicherweise durch den Triebfahrzeugführer ausgelöst und nach seinem Ermessen verändert werden kann, und die Notbremsung, deren Eigenschaften durch ein vereinbartes Sicherheitsniveau bestimmt werden. Eine Notbremsung kann durch verschiedene Einrichtungen ausgelöst werden, wie z.B. Auslösung durch den Triebfahrzeugführer ("Schnellbremsung") oder auch Auslösung durch Zugbeeinflussungssysteme ("Zwangsbremsung"). Notbremsungen werden derzeit üblicherweise durch Reibungsbremsen, Magnetschienenbremsen, Wirbelstrombremsen und elektrodynamische Bremsen ausgeführt und werden bei einer pneumatischen Reibungsbremse zum Beispiel durch Absenken des Drucks in der Hauptluftleitung oder durch Öffnen einer entsprechenden Sicherheitsschleife ausgelöst.

WO2014/079490 offenbart ein Bremssystem und ein Bremsverfahren für Schienenfahrzeuge basierend auf einer elektro-dynamischen Bremse und einer nicht voll ausgebildeten Reibungsbremse, wobei bei einer Notbremsung fast komplett auf die Reibungsbremse verzichtet wird und diese nur bei einer zu geringen Effizienz der elektro-dynamischen Bremse bei sehr geringen Geschwindigkeiten eingesetzt wird. Die Achsen der Antriebsräder sind hierbei nicht mit einem vollwertigen mechanischen Bremssystem ausgestattet.

FR 3 038 283 A1 liefert ein Bremssystem sowie ein Bremsverfahren zur Regulierung der Bremskraft einer Magnetschienenbremse während einer Notbremsung. Hierdurch kann die Bremskraft der Magnetschienenbremse während des Bremsvorgangs in Abhängigkeit von der relativen Verzögerung des Schienenfahrzeugs angepasst werden. Hierdurch kann die Sicherheit der Fahrgäste während eines Bremsvorgangs erhöht (kein abruptes Abbremsen) und der notwendige Sicherheitsabstand zwischen unterschiedlichen Schienenfahrzeugen verringert werden.

DE 10 2012 203132 A1 und DE 10 2011 052545 A1 offenbaren ebenfalls Bremsvorrichtungen und entsprechende Bremsverfahren für Schienenfahrzeuge.

Es ist die Aufgabe der vorliegenden Erfindung, eine Bremsvorrichtung für Schienenfahrzeuge und ein Verfahren zum Bremsen von Schienenfahrzeugen bereitzustellen, mit denen das Funktionsverhalten bei einer Notbremsung verbessert werden kann.

Diese Aufgabe wird durch die Lehre der unabhängigen Ansprüche gelöst. Besonders vorteilhafte Ausführungsformen der Erfindung sind in den abhängigen Ansprüchen angegeben.

Die erfindungsgemäße Bremsvorrichtung für Schienenfahrzeuge weist auf: eine erste Anforderungseinrichtung mit wenigstens einem Auslöser zum Auslösen einer Notbremsung des Schienenfahrzeugs; wenigstens eine Bremssteuerung zum Ansteuern wenigstens eines Bremssystems des Schienenfahrzeugs; einen Zugbremsmanager, der ausgestaltet ist, um beim Aktivieren der ersten Anforderungseinrichtung die wenigstens eine Bremssteuerung gemäß einem ersten Notbremsmodus anzusteuern; eine zweite Anforderungseinrichtung zum Ansteuern der wenigstens einen Bremssteuerung gemäß einem zweiten Notbremsmodus; und eine Überwachungseinrichtung zum Überwachen einer Bremswirkung des über die erste Anforderungseinrichtung ausgelösten ersten Notbremsmodus des Schienenfahrzeugs, welche die zweite Anforderungseinrichtung in Abhängigkeit von der überwachten Bremswirkung des ersten Notbremsmodus aktiviert.

Gemäß der Erfindung wird vorgeschlagen, beim Auslösen einer Notbremsung zum Beispiel durch einen Triebfahrzeugführer die wenigstens eine Bremssteuerung des wenigstens einen Bremssystems des Schienenfahrzeugs zunächst in einem ersten Notbremsmodus anzusteuern und die so erzielte Bremswirkung mittels einer Überwachungseinrichtung zu überwachen. Wird bei dieser Überwachung festgestellt, dass die Bremswirkung für eine Notbremsung unzureichend ist, so wird automatisch von dem ersten Notbremsmodus in einen zweiten Notbremsmodus gewechselt. D.h. die Funktionssicherheit bzw. Zuverlässigkeit der Notbremsung wird durch die Überwachung und den bei Bedarf nachgeschalteten zweiten Notbremsmodus gewährleistet. Indem die Bremswirkung im ersten Notbremsmodus überwacht und durch den zweiten Notbrems modus abgesichert wird, können für den ersten Notbremsmodus auch andere Kriterien als für die herkömmliche Notbremsung berücksichtigt werden. Diese Kriterien können zum Beispiel in Abhängigkeit vom Betreiber des Schienenfahrzeugs, vom Betriebszustand des Schienenfahrzeugs, vom Streckenprofil, etc. variabel gewählt werden. Während für den zweiten Notbremsmodus wie bei der herkömmlichen Notbremsung in erster Linie die Funktionssicherheit bzw. Zuverlässigkeit der Bremsung berücksichtigt wird, können für den ersten Notbremsmodus auch Kriterien wie beispielsweise Verschleiß der Bremssysteme, Energierückgewinnung während der Bremsung, Zustand der Bremssysteme, Verfügbarkeit der Bremssysteme eine Rolle spielen.

Der Zugbremsmanager ist ausgestaltet, um die wenigstens eine Bremssteuerung im ersten Notbremsmodus derart anzusteuern, dass die wenigstens eine Bremssteuerung alle zur Verfügung stehenden Bremssysteme flexibel und dynamisch zum Erzielen einer Bremswirkung ansteuert, die einer Notbremsung entspricht. D.h. im ersten Notbremsmodus können die Bremssysteme ähnlich wie bei einer Betriebsbremsung, aber ausgerichtet auf eine entsprechend höhere Bremswirkung, flexibel aus allen verfügbaren Bremssystemen ausgewählt werden und können die Bremsleistungen der ausgewählten Bremssysteme dynamisch angepasst werden. So kann zum Beispiel auf Wunsch des Betreibers des Schienenfahrzeugs die Notbremsung im ersten Notbremsmodus so ausgeführt werden, dass der Verschleiß der Bremssysteme reduziert ist, indem insbesondere verschleißarme Bremssysteme ausgewählt werden.

Vorzugsweise ist die zweite Anforderungseinrichtung ausgestaltet, um die wenigstens eine Bremssteuerung im zweiten Notbremsmodus derart anzusteuern, dass die wenigstens eine Bremssteuerung die für eine Notbremsung bestimmten oder vorgegebenen Bremssysteme zum Erzielen der einer Notbremsung entsprechenden Bremswirkung ansteuert. D.h. für den zweiten Notbremsmodus existieren ähnlich wie bei einer herkömmlichen Notbremsung starre Regeln für die Auswahl der Bremssysteme, um die Funktionssicherheit bzw. Zuverlässigkeit zu gewährleisten. Bei Bedarf werden lediglich einzelne ausgefallene Bremssysteme ausgeglichen. Die starren Regeln für den zweiten Notbremsmodus können ggf. je nach nationalen Regelungen, Fahrzeugbetreiber, Streckenprofil, Betriebszustand, etc. bestimmt sein.

Die Bremswirkung kann in diesem Zusammenhang anhand eines oder mehrerer Parameter ermittelt werden. Hierzu zählen insbesondere eine Verzögerung des Schienenfahrzeugs, eine Gesamtbremskraft des Schienenfahrzeugs, eine Geschwindigkeit bzw. Geschwindigkeitsveränderung des Schienenfahrzeugs, ein zurückgelegter Weg des Schienenfahrzeugs zwischen zwei Messpunkten, eine Energiemenge einer Energierückgewinnung bei deren Wandlung, Ableitung oder Speicherung, und dergleichen.

Die erste Anforderungseinrichtung und/oder die zweite Anforderungseinrichtung können in diesem Zusammenhang beispielsweise durch Sicherheitsschleifen oder Bussysteme gebildet sein. Die Anforderungseinrichtungen können sich dabei zum Beispiel fahrzeugweit (d.h. innerhalb eines Fahrzeugs) oder zugweit (d.h. über einen Verbund aus mehreren Fahrzeugen hinweg) erstrecken.

Der Zugbremsmanager ist in diesem Zusammenhang eine beliebige Steuereinrichtung, die geeignet ist, Bremssteuerungen von Schienenfahrzeugen - z.B. direkt oder über ein Netzwerk (z.B. Fahrzeugbus) - zu managen bzw. anzusteuern. Vorzugsweise ist der Zugbremsmanager auch geeignet, die Bremssteuerungen und/oder die von diesen angesteuerten Bremssysteme des Schienenfahrzeugs zu überwachen. Der Zugbremsmanager ist bevorzugt in eine größere Steuereinrichtung wie beispielsweise eine Fahrzeugsteuerung integriert oder als separate Steuereinrichtung ausgestaltet. Der Zugbremsmanager ist bevorzugt mit der Fahrzeugsteuerung verbunden oder in diese integriert.

In einer vorteilhaften Ausgestaltung der Erfindung ist die Überwachungseinrichtung mit einem Auslöser der zweiten Anforderungseinrichtung verbunden. Die Überwachungseinrichtung betätigt diesen Auslöser in Abhängigkeit von der überwachten Bremswirkung des ersten Notbremsmodus, um die zweite Anforderungseinrichtung zu aktivieren.

In einer vorteilhaften Ausgestaltung der Erfindung ist die Überwachungseinrichtung derart ausgestaltet, dass sie die überwachte Bremswirkung (Aist) des ersten Notbremsmodus mit einem vorgegebenen Bremswirkungsgrenzwert (Asoll) vergleicht und die zweite Anforderungseinrichtung aktiviert, falls die überwachte Bremswirkung den

Bremswirkungsgrenzwert unterschreitet (Aist < Asoll) bzw. nicht überschreitet (Aist ≤ Asoll).

Vorzugsweise ist die Überwachungseinrichtung zudem derart ausgestaltet, dass sie die zweite Anforderungseinrichtung nur aktiviert, falls ein vorgegebener Grenzwert eines vorbestimmten Toleranzkriteriums für eine unzureichende Bremswirkung des ersten Notbremsmodus (nach oben oder nach unten) überschritten wird. Bei dem Toleranzkriterium handelt es sich zum Beispiel um ein Zeitfenster, sodass die zweite Anforderungseinrichtung nur aktiviert wird, falls eine Zeitdauer (Tist) der unzureichenden Bremswirkung einen vorgegeben Zeitgrenzwert (Tlimit) überschreitet (Tist > Tlimit) bzw. nicht unterschreitet (Tist ≥ Tlimit). Allgemein kann das Toleranzkriterium einer unzureichenden Bremswirkung zum Beispiel zeitabhängig, wegabhängig und/oder geschwindigkeitsabhängig sein.

In einer weiteren vorteilhaften Ausgestaltung der Erfindung ist die Überwachungseinrichtung derart ausgestaltet, dass sie im zweiten Notbremsmodus die zweite Anforderungseinrichtung wieder deaktiviert, falls die erste Anforderungseinrichtung deaktiviert wird. Auf diese Weise kann zum Beispiel der Triebfahrzeugführer bei Bedarf eine durch ihn ausgelöste Schnellbremsung wieder unterbrechen bzw. abbrechen, auch wenn diese bereits im zweiten Notbremsmodus ausgeführt worden ist.

Gegenstand der Erfindung ist auch ein Schienenfahrzeug, das wenigstens eine oben beschriebene Bremsvorrichtung der Erfindung aufweist.

Gegenstand der Erfindung ist außerdem ein Verbund von Schienenfahrzeugen, der wenigstens eine oben beschriebene Bremsvorrichtung der Erfindung aufweist.

Als Schienenfahrzeug werden in diesem Zusammenhang alle Arten von Wagen mit oder ohne eigenen Antrieb und fest gekoppelte Einheiten aus mehreren solchen Wagen bezeichnet. Ein Verbund von Schienenfahrzeugen wird üblicherweise auch als Zug bezeichnet und wird durch variables Koppeln mehrerer Schienenfahrzeuge gebildet.

Das erfindungsgemäße Verfahren zum Bremsen eines Schienenfahrzeugs enthält die Schritte des Ansteuerns der Bremssysteme eines Schienenfahrzeugs gemäß einem ersten Notbremsmodus, wenn durch eine erste Anforderungseinrichtung eine Notbremsung ausgelöst wird; des Überwachens einer Bremswirkung des über die erste Anforderungseinrichtung ausgelösten ersten Notbremsmodus; und des Ansteuerns der Bremssysteme des Schienenfahrzeugs in Abhängigkeit von der überwachten Bremswirkung des ersten Notbremsmodus gemäß einem zweiten Notbremsmodus.

Im ersten Notbremsmodus werden alle zur Verfügung stehenden Bremssysteme des Schienenfahrzeugs flexibel und dynamisch zum Erzielen einer Bremswirkung angesteuert, die einer Notbremsung entspricht.

Vorzugsweise werden im zweiten Notbremsmodus die für eine Notbremsung bestimmten oder vorgegebenen Bremssysteme des Schienenfahrzeugs zum Erzielen der Bremswirkung angesteuert, die einer Notbremsung entspricht.

Mit diesem Verfahren der Erfindung können die gleichen Vorteile erzielt werden, die oben in Zusammenhang mit der erfindungsgemäßen Bremsvorrichtung erläutert sind.

In einer vorteilhaften Ausgestaltung der Erfindung wird die überwachte Bremswirkung des ersten Notbremsmodus mit einem vorgegebenen Bremswirkungsgrenzwert verglichen und wird der zweite Notbremsmodus ausgelöst, falls die überwachte Bremswirkung diesen Bremswirkungsgrenzwert unterschreitet bzw. nicht überschreitet.

Vorzugsweise wird der zweite Notbremsmodus nur ausgelöst, falls ein vorgegebener Grenzwert eines vorbestimmten Toleranzkriteriums für eine unzureichende Bremswirkung (nach oben oder unten) überschritten wird.

In einer vorteilhaften Ausgestaltung der Erfindung werden der erste und der zweite Notbremsmodus aufgehoben, falls die Notbremsung aufgehoben wird, d.h. keine Aktivierung der ersten Anforderungseinrichtung mehr vorliegt.

In einer weiteren vorteilhaften Ausgestaltung der Erfindung wird die Bremswirkung des über die erste Anforderungseinrichtung ausgelösten ersten Notbremsmodus durch eine Überwachungseinrichtung überwacht und wird eine Funktionsfähigkeit dieser Überwachungseinrichtung überwacht. Das Überwachungsergebnis der Funktionsfähigkeit (z.B. ordnungsgemäße Funktion, Funktionsbereitschaft, etc.) wird vorzugsweise angezeigt, bevorzugt dem Triebfahrzeugführer des Schienenfahrzeugs. Im Fall einer erkannten Fehlfunktion der Überwachungseinrichtung wird die Überwachungseinrichtung vorzugsweise automatisch oder manuell deaktiviert. Bei deaktivierter Überwachungseinrichtung führt das Auslösen einer Notbremsung über die erste Anforderungseinrichtung vorzugsweise direkt zum Aktivieren der zweiten Anforderungseinrichtung.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
Fig. 1 das Prinzip einer Bremsvorrichtung für Schienenfahrzeuge gemäß der vorliegenden Erfindung;
Fig. 2 ein Flussdiagramm für ein Verfahren zum Bremsen eines Schienenfahrzeugs gemäß der vorliegenden Erfindung; und
Fig. 3 ein Zustandsdiagramm für ein Verfahren zum Bremsen eines Schienenfahrzeugs gemäß der vorliegenden Erfindung.

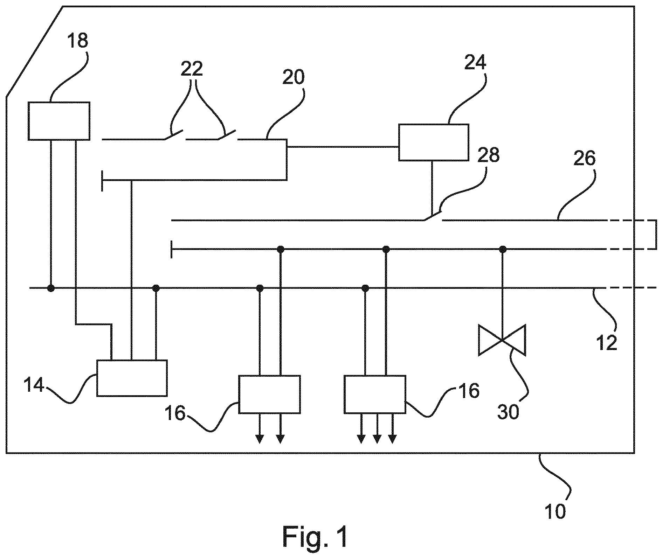

**Fig.** 1 veranschaulicht den Aufbau und die Funktionsweise einer Bremsvorrichtung für Schienenfahrzeuge gemäß einem Ausführungsbeispiel der Erfindung. Fig. 1 zeigt beispielhaft ein Schienenfahrzeug 10 in Form eines Triebwagens oder Wagens als Teil eines Zuges bzw. Fahrzeugverbundes aus mehreren miteinander gekoppelten Schienenfahrzeugen.

Ein zugweiter Fahrzeugbus 12 verbindet die mehreren Schienenfahrzeuge 10 des Zuges miteinander. Der Fahrzeugbus 12 kann zum Beispiel durch ein leitungsgebundenes Bussystem und/oder ein drahtloses Bussystem (Funk, WLAN, etc.) gebildet sein.

Das Schienenfahrzeug 10 weist einen Zugbremsmanager 14 und ein oder mehrere Bremssteuerungen 16 auf, die jeweils an den Fahrzeugbus 12 angeschlossen sind. Die Bremssteuerungen 16 steuern jeweils ein oder mehrere, gleiche oder unterschiedliche Bremssysteme des Schienenfahrzeugs an. Die von den Bremssteuerungen 16 angesteuerten Bremssysteme weisen zum Beispiel Druckluftbremsen, Reibungsbremsen, dynamische Bremsen, elektrodynamische Bremsen, Wirbelstrombremsen, Magnetschienenbremsen, etc. auf.

Der Zugbremsmanager 14 und/oder der Fahrzeugbus 12 sind mit einem Auslöser 18 einer Betriebsbremsung gekoppelt. Über diesen Auslöser 18 können der Fahrzeugführer des Schienenfahrzeugs bzw. Zuges oder eine automatische Sicherungs- und/oder Steuerungseinrichtung eine Betriebsbremsung veranlassen. Die Betriebsbremsung ist nicht Gegenstand der vorliegenden Erfindung, die erfindungsgemäße Bremsvorrichtung für Schienenfahrzeuge kann grundsätzlich mit allen Arten von Vorrichtungen und Verfahren zum Ausführen von Betriebsbremsungen kombiniert werden.

Wie in Fig. 1 dargestellt, ist dem Schienenfahrzeug 10 eine Notbremsschleife als erste Anforderungseinrichtung 20 zugeordnet. Diese erste Anforderungseinrichtung 20 ist zum Beispiel als elektrische Sicherheitsschleife oder als Bussystem ausgestaltet, die / das einen oder mehrere Auslöser 22 aufweist, durch deren Betätigung eine elektronisch überwachte Notbremsung des Schienenfahrzeugs 10 ausgelöst werden kann. Ein Auslöser 22 kann zum Beispiel vom Fahrzeugführer im Führerstand eines Triebwagens bei Bedarf betätigt werden ("Schnellbremsung"), ein anderer Auslöser 22 kann zum Beispiel durch ein Zugbeeinflussungssystem betätigt werden ("Zwangsbremsung").

Die erste Anforderungseinrichtung 20 ist mit dem Zugbremsmanager 14 verbunden. Bei einer Aktivierung der ersten Anforderungseinrichtung 20 durch Betätigen eines Auslösers 22 steuert der Zugbremsmanager 14 über den Fahrzeugbus 12 die Bremssteuerungen 16 gemäß einem ersten Notbremsmodus an, der später beschrieben wird.

Die Bremsvorrichtung für das Schienenfahrzeug 10 weist ferner eine Überwachungseinrichtung 24 auf. Diese Überwachungseinrichtung 24 ist mit der ersten Anforderungseinrichtung 20 verbunden, um über eine Aktivierung der ersten Anforderungseinrichtung 20 informiert zu werden.

Das Schienenfahrzeug 10 weist ferner eine zugweite Notbremsschleife als zweite Anforderungseinrichtung 26 auf. Die zweite Anforderungseinrichtung 26 ist zum Beispiel eine Sicherheitsschleife, die durch ein Notbremsventil 30 eine Bremsung des Schienenfahrzeugs 10 aktivieren kann.

Die zweite Anforderungseinrichtung 26 weist einen Auslöser 28 auf. Dieser Auslöser 28 ist mit der Überwachungseinrichtung 24 gekoppelt, sodass dieser durch die Überwachungseinrichtung 24 betätigt werden kann. Die zweite Anforderungseinrichtung 26 ist außerdem mit den Bremssteuerungen 16 des Schienenfahrzeugs 10 bzw. den Schienenfahrzeugen des Zuges gekoppelt. Bei einer Aktivierung der zweiten Anforderungseinrichtung 26 durch Betätigen des Auslösers 28 werden die Bremssteuerungen 16 gemäß einem zweiten Notbremsmodus angesteuert, der später beschrieben wird.

Die erste Anforderungseinrichtung 20 und die zweite Anforderungseinrichtung 26 werden durch Betätigen der entsprechenden Auslöser 22, 28 aktiviert. Im Fall von Sicherheitsschleifen erfolgt das Aktivieren dabei üblicherweise durch ein Öffnen der Sicherheitsschleifen.

Die Überwachungseinrichtung 24 prüft im Fall eines durch einen Auslöser 22 der ersten Anforderungseinrichtung 20 ausgelösten ersten Notbremsmodus, ob eine ausreichende Bremswirkung für eine Notbremsung vorliegt. Zu diesem Zweck ist die Überwachungseinrichtung 24 beispielsweise derart ausgestaltet, dass sie die überwachte Bremswirkung Aist des ersten Notbremsmodus mit einem vorgegebenen Bremswirkungsgrenzwert Asoll vergleicht und die zweite Anforderungseinrichtung 26 über den Auslöser 28 aktiviert, falls die überwachte Bremswirkung Aist den Bremswirkungsgrenzwert Asoll unterschreitet (Aist < Asoll) bzw. nicht überschreitet (Aist ≤ Asoll). Die Bremswirkung kann dabei von der Überwachungseinrichtung 24 anhand eines oder mehrerer Parameter ermittelt werden. Geeignete Parameter sind insbesondere eine Verzögerung, eine Gesamtbremskraft und eine Geschwindigkeit bzw. Geschwindigkeitsveränderung des Schienenfahrzeugs 10, ein zurückgelegter Weg des Schienenfahrzeugs 10 zwischen zwei Messpunkten, Bremskräfte, Reaktionskräfte und/oder Momente an den Bremssystemen sowie eine Energiemenge einer Energierückgewinnung während des Bremsvorgangs bei deren Wandlung, Ableitung oder Speicherung.

Um ein unnötiges Auslösen des zweiten Notbremsmodus durch Aktivieren der zweiten Anforderungseinrichtung 26 zum Beispiel aufgrund von kurzzeitigen Schwankungen eines überwachten Parameters der Bremswirkung zu vermeiden, ist bevorzugt vorgesehen, dass die Überwachungseinrichtung 24 die zweite Anforderungseinrichtung 26 nur aktiviert, falls ein vorgegebener Grenzwert eines vorbestimmten Toleranzkriteriums für eine unzureichende Bremswirkung des ersten Notbremsmodus über- oder unterschritten wird. Bei dem Toleranzkriterium kann es sich zum Beispiel um ein Zeitfenster handeln, sodass die zweite Anforderungseinrichtung 26 nur aktiviert wird, falls eine Zeitdauer (Tist) der unzureichenden Bremswirkung einen vorgegeben Zeitgrenzwert (Tlimit) überschreitet (Tist > Tlimit) bzw. nicht unterschreitet (Tist ≥ Tlimit). Allgemein kann das Toleranzkriterium einer unzureichenden Bremswirkung zeitabhängig, wegabhängig und/oder geschwindigkeitsabhängig konzipiert sein.

Im ersten Notbremsmodus steuert der Zugbremsmanager 14 die Bremssteuerungen 16 so an, dass diese alle zur Verfügung stehenden Bremssysteme flexibel und dynamisch zum Erzielen einer Bremswirkung ansteuern, die einer Notbremsung entspricht. So können im ersten Notbremsmodus die Bremssysteme des Schienenfahrzeugs 10 ähnlich wie bei einer Betriebsbremsung - nur mit einer gegebenenfalls höheren Bremswirkung - flexibel aus allen verfügbaren Bremssystemen ausgewählt werden und können die Bremsleistungen der ausgewählten Bremssysteme dynamisch angepasst werden. Auf diese Weise kann zum Beispiel auf Wunsch des Betreibers des Schienenfahrzeugs 10 die Notbremsung im ersten Notbremsmodus so ausgeführt werden, dass der Verschleiß der Bremssysteme reduziert ist, indem insbesondere verschleißarme Bremssysteme eingesetzt werden.

Die geforderte Funktionssicherheit bzw. Zuverlässigkeit der Notbremsung wird bei der erfindungsgemäßen Bremsvorrichtung durch die Überwachung der Bremswirkung durch die Überwachungseinrichtung 24 und den bei Bedarf nachgeschalteten zweiten Notbremsmodus gewährleistet. Im zweiten Notbremsmodus werden die Bremssteuerungen 16 des Schienenfahrzeugs 10 derart angesteuert, dass diese die für eine Notbremsung bestimmten oder vorgegebenen Bremssysteme ansteuert. D.h. für den zweiten Notbremsmodus existieren ähnlich wie bei einer herkömmlichen Notbremsung starre Regeln für die Auswahl der Bremssysteme, um die Funktionssicherheit bzw. Zuverlässigkeit zu gewährleisten. Bei Bedarf werden lediglich einzelne ausgefallene Bremssysteme ausgeglichen. Im zweiten Notbremsmodus werden insbesondere Reibungsbremsen eingesetzt.

Hebt der Fahrzeugführer die Notbremsung über die erste Anforderungseinrichtung 20 wieder auf, so wird automatisch der erste Notbremsmodus beendet oder, falls die Überwachungseinrichtung 24 über den Auslöser 28 die zweite Anforderungseinrichtung 26 aktiviert hatte, automatisch der zweite Notbremsmodus aufgehoben. D.h. der Fahrzeugführer hat vorzugsweise die Möglichkeit, unter bestimmten Voraussetzungen die Notbremsung zu unterbrechen bzw. zu beenden.

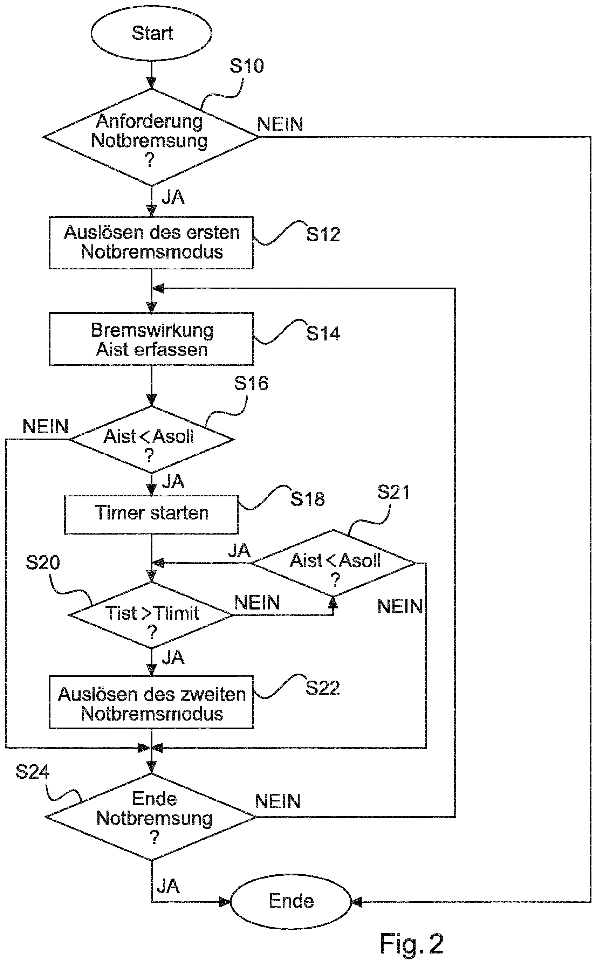

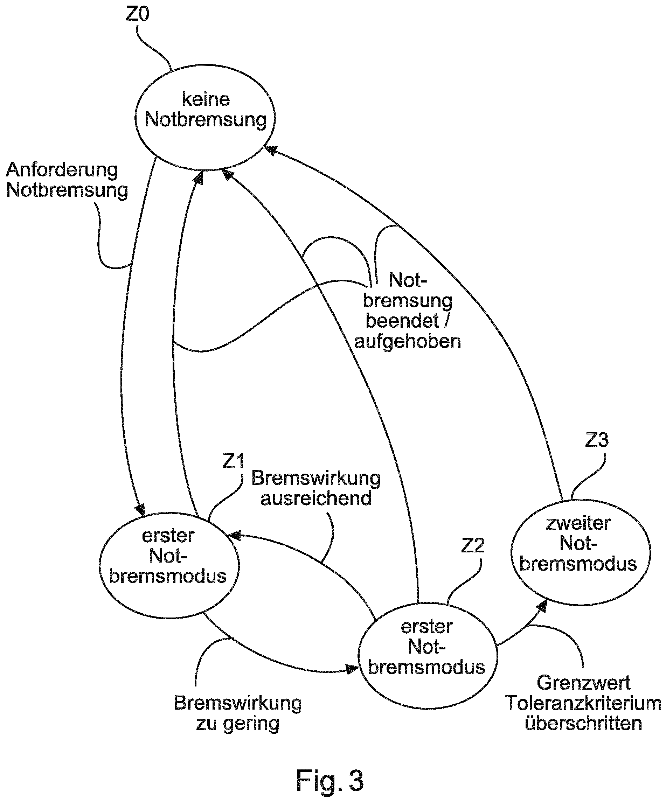

**Fig. 2** **und** **3** zeigen beispielhaft ein Verfahren zum Ausführen einer elektronisch überwachten Notbremsung eines Schienenfahrzeugs 10 gemäß der Erfindung.

Ausgehend von einem Zustand Z0, in dem keine Notbremsung stattfindet, d.h. zum Beispiel überhaupt keine Bremsung stattfindet oder eine Betriebsbremsung ausgeführt wird, wird in einem ersten Schritt S10 überprüft, ob eine Anforderung für eine Notbremsung vorliegt, d.h. ob zum Beispiel der Fahrzeugführer einen Auslöser 22 der ersten Anforderungseinrichtung 20 betätigt hat. Falls dies nicht der Fall ist, werden keine weiteren Schritte zum Durchführen einer Notbremsung ausgeführt. Andernfalls wird in Schritt S12 der erste Notbremsmodus ausgelöst, sodass die Bremsvorrichtung in den Zustand Z1 wechselt.

Anschließend wird in Schritt S14 die aktuelle Bremswirkung Aist des Schienenfahrzeugs 10 beispielsweise in Form einer Verzögerung, einer Gesamtbremskraft oder einer Geschwindigkeitsänderung des Schienenfahrzeugs 10 ermittelt.

In Schritt S16 prüft dann die Überwachungseinrichtung 24, ob die aktuelle Bremswirkung Aist für die gewünschte Notbremsung des Schienenfahrzeugs 10 ausreichend ist. Hierzu vergleicht sie beispielsweise den Istwert der Bremswirkung Aist mit einem vorgegebenen Bremswirkungsgrenzwert Asoll.

Falls der Istwert der Bremswirkung Aist den Sollwert der Bremswirkung Asoll unterschreitet (Aist < Asoll), d.h. bei einer Entscheidung "JA" in Schritt S16, gelangt die Bremsvorrichtung in den Zustand Z2. In diesem Zustand Z2 wird weiterhin der erste Notbremsmodus ausgeführt, aber wird zudem ein Toleranzkriterium für die unzureichende Bremswirkung überwacht. Wie in Fig. 2 dargestellt, wird beispielsweise in Schritt S18 ein Timer gestartet, um eine Zeitdauer Tist zu ermitteln, wie lange die unzureichende Bremswirkung vorliegt. Die Zeitdauer Tist wird in Schritt S20 mit einem vorgegebenen Zeitgrenzwert Tlimit verglichen. Falls die Zeitdauer der unzureichenden Bremswirkung Tist noch unterhalb des Zeitgrenzwerts Tlimit liegt ("NEIN" in Schritt S20), wird die Bremswirkung in einem Schritt S21 weiter überwacht und weiterhin das hier zeitliche Toleranzkriterium überwacht.

Falls festgestellt wird, dass die Bremswirkung innerhalb des Zeitgrenzwerts Tlimit doch wieder ausreichend wird ("NEIN" in Schritt S21) kehrt die Bremsvorrichtung wieder in den Zustand Z1 zurück, um den ersten Schnellbremsmodus fortzusetzen.

Falls hingegen die Zeitdauer der unzureichenden Bremswirkung Tist den vorgegebenen Zeitgrenzwert Tlimit überschreitet ("JA" in Schritt S20), d.h. falls allgemein ein vorgegebener Grenzwert eines vorbestimmten Toleranzkriteriums über- oder unterschritten wird, wird die Bremsvorrichtung in einen Zustand Z3 überführt, indem in Schritt S22 der zweite Notbremsmodus ausgelöst wird. Wie oben beschrieben, erfolgt dies durch eine Betätigung des Auslösers 28 der zweiten Anforderungseinrichtung 26 zum Beispiel durch ein entsprechendes Signal von der Überwachungseinrichtung 24.

Anschließend wird in Schritt S24 geprüft, ob die elektronisch überwachte Notbremsung zum Beispiel durch den Fahrzeugführer wieder aufgehoben worden ist. Falls dies der Fall ist, wird das komplette Bremsverfahren beendet und die Bremsvorrichtung ausgehend von Zustand Z1, Zustand Z2 oder Zustand Z3 wieder zurück in den Ausgangszustand Z0 ohne Notbremsung überführt. Andernfalls ("NEIN" in Schritt S24) wird das Bremsverfahren fortgesetzt, zum Beispiel wieder mit Schritt S14.

### BEZUGSZEICHENLISTE

- 10: Schienenfahrzeug
- 12: Fahrzeugbus
- 14: Zugbremsmanager
- 16: Bremssteuerung
- 18: Auslöser Betriebsbremsung
- 20: erste Anforderungseinrichtung
- 22: Auslöser erste Anforderungseinrichtung
- 24: Überwachungseinrichtung
- 26: zweite Anforderungseinrichtung
- 28: Auslöser zweite Anforderungseinrichtung
- 30: Notbremsventil
- Aist: Istwert Bremswirkung
- Asoll: Sollwert Bremswirkung
- Tist: aktueller Wert Toleranzkriterium (z.B. Zeitdauer unzureichende Bremswirkung)
- Tlimit: Grenzwert Toleranzkriterium (z.B. Zeitgrenzwert unzureichende Bremswirkung)

## Patentansprüche

1. Bremsvorrichtung für Schienenfahrzeuge, aufweisend:
eine erste Anforderungseinrichtung (20) mit wenigstens einem Auslöser (22) zum Auslösen einer Notbremsung des Schienenfahrzeugs (10);
wenigstens eine Bremssteuerung (16) zum Ansteuern wenigstens eines Bremssystems des Schienenfahrzeugs (10); und
einen Zugbremsmanager (14), der ausgestaltet ist, um beim Aktivieren der ersten Anforderungseinrichtung (20) die wenigstens eine Bremssteuerung (16) gemäß einem ersten Notbremsmodus anzusteuern,
eine zweite Anforderungseinrichtung (26) zum Ansteuern der wenigstens einen Bremssteuerung (16) gemäß einem zweiten Notbremsmodus vorgesehen ist;
eine Überwachungseinrichtung (24) zum Überwachen einer Bremswirkung (Aist) des über die erste Anforderungseinrichtung (20) ausgelösten ersten Notbremsmodus des Schienenfahrzeugs (10) vorgesehen ist, wobei die Überwachungseinrichtung (24) die zweite Anforderungseinrichtung (26) in Abhängigkeit von der überwachten Bremswirkung (Aist) des ersten Notbremsmodus aktiviert;
wobei der Zugbremsmanager (14) ausgestaltet ist, um die wenigstens eine Bremssteuerung (16) im ersten Notbremsmodus derart anzusteuern, dass die wenigstens eine Bremssteuerung (16) alle zur Verfügung stehenden Bremssysteme flexibel und dynamisch zum Erzielen einer Bremswirkung ansteuert, die einer Notbremsung entspricht.

2. Bremsvorrichtung für Schienenfahrzeuge nach Anspruch 1, bei welchem
die zweite Anforderungseinrichtung (26) ausgestaltet ist, um die wenigstens eine Bremssteuerung (16) im zweiten Notbremsmodus derart anzusteuern, dass die wenigstens eine Bremssteuerung (16) die für eine Notbremsung bestimmten Bremssysteme zum Erzielen der Bremswirkung ansteuert, die einer Notbremsung entspricht.

3. Bremsvorrichtung für Schienenfahrzeuge nach einem der vorhergehenden Ansprüche, bei welchem
die Überwachungseinrichtung (24) mit einem Auslöser (28) der zweiten Anforderungseinrichtung (26) verbunden ist und diesen in Abhängigkeit von der überwachten Bremswirkung (Aist) des ersten Notbremsmodus betätigt, um die zweite Anforderungseinrichtung (26) zu aktivieren.

4. Bremsvorrichtung für Schienenfahrzeuge nach einem der vorhergehenden Ansprüche, bei welchem
die Überwachungseinrichtung (24) ausgestaltet ist, um die überwachte Bremswirkung (Aist) des ersten Notbremsmodus mit einem vorgegebenen Bremswirkungsgrenzwert (Asoll) zu vergleichen und die zweite Anforderungseinrichtung (26) zu aktivieren, falls die überwachte Bremswirkung (Aist) den Bremswirkungsgrenzwert (Asoll) unterschreitet bzw. nicht überschreitet.

5. Bremsvorrichtung für Schienenfahrzeuge nach Anspruch 4, bei welchem
die Überwachungseinrichtung (24) ausgestaltet ist, um die zweite Anforderungseinrichtung (26) nur zu aktivieren, falls ein vorgegebener Grenzwert (Tlimit) eines vorbestimmten Toleranzkriteriums für eine unzureichende Bremswirkung des ersten Notbremsmodus überschritten wird.

6. Bremsvorrichtung für Schienenfahrzeuge nach einem der vorhergehenden Ansprüche, bei welchem
die Überwachungseinrichtung (24) ausgestaltet ist, um im zweiten Notbremsmodus die zweite Anforderungseinrichtung (26) wieder zu deaktivieren, falls die erste Anforderungseinrichtung (20) deaktiviert wird.

7. Schienenfahrzeug (10), welches wenigstens eine Bremsvorrichtung nach einem der Ansprüche 1 bis 6 aufweist.

8. Verbund aus mehreren Schienenfahrzeugen (10), welcher wenigstens eine Bremsvorrichtung nach einem der Ansprüche 1 bis 6 aufweist.

9. Verfahren zum Bremsen von Schienenfahrzeugen (10), mit den Schritten:
Ansteuern der Bremssysteme eines Schienenfahrzeugs gemäß einem ersten Notbremsmodus, wenn durch eine erste Anforderungseinrichtung (20) eine Notbremsung ausgelöst wird;
Überwachen einer Bremswirkung (Aist) des über die erste Anforderungseinrichtung (20) ausgelösten ersten Notbremsmodus,
wobei die Bremssysteme des Schienenfahrzeugs (10) in Abhängigkeit von der überwachten Bremswirkung (Aist) des ersten Notbremsmodus gemäß einem zweiten Notbremsmodus angesteuert werden; und
wobei im ersten Notbremsmodus alle zur Verfügung stehenden Bremssysteme des Schienenfahrzeugs (10) flexibel und dynamisch zum Erzielen einer Bremswirkung angesteuert werden, die einer Notbremsung entspricht.

10. Verfahren nach Anspruch 9, bei welchem
im zweiten Notbremsmodus die für eine Notbremsung bestimmten Bremssysteme des Schienenfahrzeugs (10) zum Erzielen der Bremswirkung angesteuert werden, die einer Notbremsung entspricht.

11. Verfahren nach einem der Ansprüche 9 oder 10, bei welchem
die überwachte Bremswirkung (Aist) des ersten Notbremsmodus mit einem vorgegebenen Bremswirkungsgrenzwert (Asoll) verglichen wird und der zweite Notbremsmodus ausgelöst wird, falls die überwachte Bremswirkung (Aist) den Bremswirkungsgrenzwert (Asoll) unterschreitet bzw. nicht überschreitet.

12. Verfahren nach Anspruch 11, bei welchem
der zweite Notbremsmodus nur ausgelöst wird, falls ein vorgegebener Grenzwert (Tlimit) eines vorbestimmten Toleranzkriteriums für eine unzureichende Bremswirkung überschritten wird.

13. Verfahren nach einem der Ansprüche 9 bis 12, bei welchem
falls die Notbremsung aufgehoben wird, der erste und der zweite Notbremsmodus aufgehoben werden.

14. Verfahren nach einem der Ansprüche 9 bis 13, bei welchem
die Bremswirkung (Aist) des ersten Notbremsmodus durch eine Überwachungseinrichtung (24) überwacht wird; und
eine Funktionsfähigkeit der Überwachungseinrichtung (24) überwacht wird.

## Claims

1. Braking device for rail vehicles, having:
a first requesting device (20) having at least one trigger (22) for triggering emergency braking of the rail vehicle (10);
at least one brake controller (16) for actuating at least one brake system of the rail vehicle (10); and
a train brake manager (14) that is designed to actuate the at least one brake controller (16) in a first emergency braking mode upon activation of the first requesting device (20);
a second requesting device (26) for actuating the at least one brake controller (16) in a second emergency braking mode is provided;
a monitoring device (24) for monitoring a braking effect (Aist) of the first emergency braking mode, triggered by the first requesting device (20), of the rail vehicle (10) is provided, wherein the monitoring device (24) activates the second requesting device (26) depending on the monitored braking effect (Aist) of the first emergency braking mode;
wherein the train brake manager (14) is designed to actuate the at least one brake controller (16) in the first emergency braking mode such that the at least one brake controller (16) flexibly and dynamically actuates all of the available brake systems in order to achieve a braking effect that corresponds to emergency braking.

2. Braking device for rail vehicles according to claim 1, wherein
the second requesting device (26) is designed to actuate the at least one brake controller (16) in the second emergency braking mode such that the at least one brake controller (16) actuates the brake systems defined for emergency braking in order to achieve the braking effect that corresponds to emergency braking.

3. Braking device for rail vehicles according to any of the preceding claims, wherein
the monitoring device (24) is connected to a trigger (28) of the second requesting device (26) and actuates this trigger depending on the monitored braking effect (Aist) of the first emergency braking mode, in order to activate the second requesting device (26).

4. Braking device for rail vehicles according to any of the preceding claims, wherein
the monitoring device (24) is designed to compare the monitored braking effect (Aist) of the first emergency braking mode with a predefined braking effect limit value (Asoll) and to activate the second requesting device (26) if the monitored braking effect (Aist) falls below or does not exceed the braking effect limit value (Asoll).

5. Braking device for rail vehicles according to claim 4, wherein
the monitoring device (24) is designed to activate the second requesting device (26) only if a predefined limit value (Tlimit) of a predetermined tolerance criterion for an insufficient braking effect of the first emergency braking mode is exceeded.

6. Braking device for rail vehicles according to any of the preceding claims, wherein
the monitoring device (24) is designed to deactivate the second requesting device (26) again in the second emergency braking mode if the first requesting device (20) is deactivated.

7. Rail vehicle (10) having at least one braking device according to any of claims 1 to 6.

8. Group consisting of a plurality of rail vehicles (10), the group having at least one braking device according to any of claims 1 to 6.

9. Method for braking rail vehicles (10), having the steps:
actuating the brake systems of a rail vehicle in accordance with a first emergency braking mode when emergency braking is triggered by a first requesting device (20);
monitoring a braking effect (Aist) of the first emergency braking mode triggered by the first requesting device (20),
wherein the brake systems of the rail vehicle (10) are actuated in accordance with a second emergency braking mode depending on the monitored braking effect (Aist) of the first emergency braking mode; and
wherein in the first emergency braking mode, all of the available brake systems of the rail vehicle (10) are actuated flexibly and dynamically in order to achieve a braking effect that corresponds to emergency braking.

10. Method according to claim 9, wherein
in the second emergency braking mode, the brake systems, defined for emergency braking, of the rail vehicle (10) are actuated in order to achieve the braking effect that corresponds to emergency braking.

11. Method according to claim 9 or 10, wherein
the monitored braking effect (Aist) of the first emergency braking mode is compared with a predefined braking effect limit value (Asoll) and the second emergency braking mode is triggered if the monitored braking effect (Aist) falls below or does not exceed the braking effect limit value (Asoll).

12. Method according to claim 11, wherein
the second emergency braking mode is triggered only if a predefined limit value (Tlimit) of a predetermined tolerance criterion for an insufficient braking effect is exceeded.

13. Method according to any of claims 9 to 12, wherein
the first and the second emergency braking mode are cancelled if the emergency braking is cancelled.

14. Method according to any of claims 9 to 13, wherein
the braking effect (Aist) of the first emergency braking mode is monitored by a monitoring device (24); and
a functionality of the monitoring device (24) is monitored.

## Revendications

1. Installation de freinage de véhicules ferroviaires, comportant :
un premier dispositif (20) de demande ayant au moins un déclencheur (22) pour le déclenchement d'un freinage d'urgence du véhicule (10) ferroviaire ;
au moins une commande (16) de frein pour la commande d'au moins un système de frein du véhicule (10) ferroviaire ; et
un gestionnaire (14) de frein de train, qui est conformé pour, à l'activation du premier dispositif (20) de demande, commander la au moins une commande (16) de frein suivant un premier mode de freinage d'urgence,
un deuxième dispositif (26) de demande est prévu pour la commande de la au moins une commande (16) de frein suivant un deuxième mode de freinage d'urgence ;
un dispositif (24) de contrôle est prévu pour le contrôle d'un effet (Aist) de freinage du véhicule (10) ferroviaire, déclenché par le premier dispositif (20) de demande, le dispositif (24) de contrôle activant le deuxième dispositif (26) de demande en fonction de l'effet (Aist) de freinage contrôlé du premier mode de freinage d'urgence ;
dans lequel le gestionnaire (14) de frein de train est conformé pour commander la au moins une commande (16) de frein dans la premier mode de freinage d'urgence, de manière à ce que la au moins une commande (16) de frein commande d'une manière souple et dynamique tous les systèmes de frein disponibles pour obtenir un effet de freinage, qui correspond à un freinage d'urgence.

2. Installation de freinage de véhicules ferroviaires suivant la revendication 1, dans laquelle
le deuxième dispositif (26) de demande est conformé pour commander la au moins une commande (16) de frein dans le deuxième mode de freinage d'urgence, de manière à ce que la au moins une commande (16) de frein commande les systèmes de frein destinés à un freinage d'urgence pour obtenir l'effet de freinage, qui correspond à un freinage d'urgence.

3. Installation de freinage de véhicules ferroviaires suivant l'une des revendications précédentes, dans laquelle
le dispositif (24) de contrôle est relié à un déclencheur (28) du deuxième dispositif (26) de demande et l'actionne en fonction de l'effet (Aist) de freinage contrôlé du premier mode de freinage d'urgence, afin d'activer le deuxième dispositif (26) de demande.

4. Installation de freinage de véhicules ferroviaires suivant l'une des revendications précédentes, dans laquelle
le dispositif (24) de contrôle est conformé pour comparer l'effet (Aist) de freinage contrôlé du premier mode de freinage d'urgence à une valeur (Asoll) limite d'effet de freinage donnée à l'avance et pour activer le deuxième dispositif (26) de demande, si l'effet (Aist) de freinage contrôlé est inférieur à la valeur (Asoll) limite d'effet de freinage ou ne la dépasse pas.

5. Installation de freinage de véhicules ferroviaires suivant la revendication 4, dans laquelle
le dispositif (24) de contrôle est conformé pour activer le deuxième dispositif (26) de demande, seulement si une valeur (Tlimit) limite donnée à l'avance d'un critère de tolérance défini à l'avance pour un effet de freinage insuffisant du premier mode de freinage d'urgence est dépassée.

6. Installation de freinage de véhicules ferroviaires suivant l'une des revendications précédentes, dans laquelle
le dispositif (24) de contrôle est conformé pour redésactiver, dans le deuxième mode de freinage d'urgence, le deuxième dispositif (26) de demande, si le premier dispositif (20) de demande est désactivé.

7. Véhicule (10) ferroviaire, qui a au moins une installation de freinage suivant l'une des revendications 1 à 6.

8. Convoi de plusieurs véhicules (10) ferroviaires, qui a au moins une installation de freinage suivant l'une des revendications 1 à 6.

9. Procédé de freinage de véhicules (10) ferroviaires comprenant les stades :
commande des systèmes de frein d'un véhicule ferroviaire suivant un premier mode de freinage d'urgence, si un freinage d'urgence est déclenché par un premier dispositif (20) de demande ;
contrôle d'un effet (Aist) de freinage du premier mode de freinage d'urgence déclenché par le premier dispositif (20) de demande,
dans lequel on commande, suivant un deuxième mode de freinage d'urgence, les systèmes de frein du véhicule (10) ferroviaire en fonction de l'effet (Aist) de freinage contrôlé du premier mode de freinage d'urgence ; et
dans lequel, dans le premier mode de freinage d'urgence, tous les systèmes de frein disponibles du véhicule (10) ferroviaire sont commandés d'une manière souple et dynamique pour obtenir un effet de freinage, qui correspond à un freinage d'urgence.

10. Procédé suivant la revendication 9, dans lequel
dans le deuxième mode de freinage d'urgence, on commande les systèmes de frein destinés à un freinage d'urgence du véhicule (10) ferroviaire pour obtenir l'effet de freinage, qui correspond à un freinage d'urgence.

11. Procédé suivant l'une des revendications 9 ou 10, dans lequel on compare l'effet (Aist) de freinage contrôlé du premier mode de freinage d'urgence à une valeur (Asoll) limite d'effet de freinage donnée à l'avance et on déclenche le deuxième mode de freinage d'urgence, si l'effet (Aist) de freinage est inférieur à la valeur (Asoll) limite d'effet de freinage ou ne lui est pas supérieur.

12. Procédé suivant la revendication 11, dans lequel
on ne déclenche le deuxième mode de freinage d'urgence que, si une valeur (Tlimit) limite donnée à l'avance d'un critère de tolérance défini à l'avance pour un effet de freinage insuffisant est dépassée.

13. Procédé suivant l'une des revendications 9 à 12, dans lequel
si on arrête le freinage d'urgence, on arrête le premier et le deuxième modes de freinage d'urgence.

14. Procédé suivant l'une des revendications 9 à 13, dans lequel
on contrôle l'effet (Aist) de freinage du premier mode de freinage d'urgence par un dispositif (24) de contrôle ; et
on contrôle une aptitude à fonctionner du dispositif (24) de contrôle.
